# EUROPEAN PATENT SPECIFICATION

(11) **EP 1 802 386 B1**
(45) Date of publication and mention of the grant of the patent: **03.08.2011**
(21) Application number: 05790098.7
(22) Date of filing: 30.09.2005
(51) Int. Cl.: B01F 13/10, B01F 15/04, G01G 19/22

(54) **A tinting machine system and method**
Tönungsmaschinensystem und Verfahren
Système de machine à teinter et procédé

(30) Priority: 14.10.2004 GB 0422787
(43) Date of publication of application: 04.07.2007
(73) Proprietor: Akzo Nobel Coatings International B.V., 6824 BM Arnhem (NL)
(72) Inventor: OAKES, Ian David, Reading, Berkshire RG7 3DY (GB)
(74) Representative: Schalkwijk, Pieter Cornelis
(86) International application number: PCT/EP2005/010634
(87) International publication number: WO 2006/040033

(56) References cited:
- EP-A- 0 612 558
- US-A- 5 971 037
- US-A1- 2003 019 537

## Description

The present invention relates to a tinting machine system for tinting base paints, and to a method of detecting errors of weight of individual colourant dispensed in a process for tinting base paints.

Paint or similar coating compositions such as lacquers, varnishes or wood stains, is used by both the skilled professional decorator and the relatively unskilled do-it-yourself painter for a variety of reasons. Typically, these are to brighten up the surroundings and/or to match the colour of a particular item of furniture, floor or wall covering, and other surfaces found in buildings. As consumers have become increasingly sophisticated and individual in their choice of colours, the demand for a wider range of colours has also increased. This presents a problem to the paint manufacturer and the retailer or trade store keeper as the former has to produce many colours in small amounts, thus losing the economies of scale and, of course the retailer or store keeper has to provide additional space to store and display this plurality of coloured paints. A typical paint would be architectural paint used on site at ambient temperatures.

Some paint manufacturers have addressed this problem by developing tinting machines. These operate on the basis that a variety of colours can be made by adding colourant to a factory produced base paint at the retailer's premises. Such machines are referred to as in-store tinting machines. A small number of different coloured base paints, comprising three or four spanning the range of light to deep shades, is provided by the supplier to the retailer, in cans. Such a base paint is unfinished from the point of view of the final colour.

The further colourant to be added is usually in the form of pigments, pigment concentrates, tinters or dyes. Usually, about twenty such colourants are required to produce the full colour range of paints, although only frequently three or four are required to produce any given colour. The colourants are added to the base paint according to a predetermined recipe, being one of many, stored in a computer. The recipe also indicates which of the base paints should be selected for tinting in order to produce the required colour.

Such tinting machines typically comprise a number of storage vessels containing the colourants, a means of delivering the colourant to the can of base paint, for example by one or more manual or automated piston or gear pumps, storage means for the collection of recipes and control means (manual and/or computerised) for controlling the delivery of colourant in accordance with the selected recipe. The control means may, for example, control the addition of colourant by governing the traverse of pistons in pumps or by activating the pumps for a predetermined time period so that a predetermined volume of colourant is delivered in accordance with the recipe for the selected colour. In this way varying amounts of each colourant may be added to the selected base paint enabling paints of a variety of alternative colours to be produced. Finally, the base paint and added colourant are subjected to mixing, usually by intense shaking, to obtain a homogeneous mixture of base paint and colourant with even colour.

The problem with such tinting machines, however is that the actual colour of the final paint depends critically on the amount of each of the colourants added to the base paint. For example, where a colourant is added using a pump driven by a motor, the number of turns or steps of the motor relates to a quantity of colourant to be added. This relationship is determined by measurements taken at the time of assembly of the machine and is used to calibrate the pumps.

However, for various reasons, this calibration can change over time. For example, because pigments are generally very hard materials, the pump mechanism will wear with use, resulting in additions being made which are not in accordance with the recipe. Even when the pumps are operating correctly the incorrect amount of colourants may be added, if, for example the nozzles through which the colourants exit into the can of base paint are partially or fully blocked. In larger retail stores, the high use rate can result in the tinting machine going out of calibration within a few weeks. This results in a mis-tint causing the resulting paint to be other than the specified colour and consequently discarded. Even worse is when the variation from the recipe is small and the mis-tint passes unnoticed until the paint has been applied. This inevitably requires a surface to be repainted with the intended colour causing additional expense and inconvenience. Other causes of mis-tinting are many and include defective pumps, leaky pipework and empty tinter vessels.
Since the tinting machines are designed to produce many different colours, it is very difficult for the operator to recognise simply by looking at the most recently mixed paint when a particular colour has been incorrectly tinted. Consequently, many colours may be mis-tinted before it comes to the operator's attention.

Tinting machines are known (US2003/0019537 which discloses a tinting machine in accordance with the preamble of claim 1) where the container of a tinted coating composition is weighed, for example using a load cell, before and after a particular tint, which generally comprises more than one colourant, has been dispensed into the container, thus enabling the total actual weight of colourant dispensed for that particular tint to be calculated. The actual weight is then compared to a correct weight which is stored in the collection of colour recipes, and an error signal generated if the difference between the actual and correct weights is outside a predetermined acceptable range. Such a signal alerts the machine operator to a mis-tint who can then take appropriate action. This data can also be monitored to give an indication of the general state of repair of the tinting machine.

However, in such tinting machines it is not possible to determine the degree to which each colourant dispensed contributes to the overall error, since each tint comprises several, typically three or more, colourants. Thus whilst it is known that there is an error associated with a particular tint, it is not possible to determine which particular colourant or colourants is causing the error, and adjust accordingly.

In tinting machines, the colourant can be dispensed either simultaneously, or sequentially.

In simultaneously dispensing machines, each of the colourants required to be added to the base paint to achieve the desired colour of coating composition is added separately, but substantially simultaneously, for example by the number of turns of the pump motor. In the case of simultaneous dispensing it is impossible to either check that the individual colourant has been added accurately, or indeed control the addition of each colourant by, for example, weighing the container.

In sequentially dispensing machines, each of the colourants required to be added to the base paint to achieve the desired colour of coating composition is added one after the other, using a pump driven by a motor. US5971037 describes a metering machine which sequentially dispenses product into a capsule, the product being weighed individually. In both sequentially and simultaneously dispensing tinting machines a maintenance engineer calibrates individual colourant dispenser systems by manually dispensing colourant from each dispenser for a range of number of turns of the pump, which in turn corresponds to a number of motor steps, so as to generate a calibration curve, typically a straight line, which mathematically equates the number of steps of the motor required to dispense a known quantity of colourant. Based on this calibration curve, it is possible to select a required quantity of colourant for a particular tint, and know how many steps of the motor are required to dispense such a quantity.

To check the calibration is correct, i.e. to establish that the quantity of colourant dispensed corresponds to the number of steps of the motor, the maintenance engineer can repeat the calibration process to generate a new curve. A large discrepancy between the two curves might indicate that there is a problem with a component of the colourant dispenser system, for example, the pump is worn to such an extent that it needs replacing.

It can be seen that this is a very laborious process, and requires a maintenance engineer to be in attendance. Furthermore, it would require the tinting machine being unavailable for customer use for a considerable period of time, and finally such a procedure is a manual process and is therefore sensitive to operator error. Clearly this is not an efficient means of maintaining the tinting machine, and is therefore undesirable.

An object of the present invention is to provide a tinting machine system which can be maintained more efficiently.

According to the present invention there is provided a tinting machine system for tinting base paint supplied in a container which base paint is suitable for use in a tinted coating composition so as to produce a tinted coating composition, the tinting machine system comprising a tinting machine and processing means, the tinting machine having a colourant dispenser system comprising an actuator able to dispense a pre-determined amount of at least one liquid colourant directly into the container, and weighing means able to weigh the container to determine an actual dispensed weight of each individual colourant and/or an actual total dispensed weight, the processing means able to compare the actual dispensed weight of each individual colourant and/or the actual total dispensed weight, with a correct weight for the tinted coating composition stored in the processing means for each dispensed tinted coating composition, wherein the processing means comprises statistical analysis means, the statistical analysis being software which employs regression analysis to statistically analyse the actual dispensed weight of each individual colourant and/or the actual total dispensed weight for each dispensed tinted coating composition so as to calculate a colourant weight dispenser error value for each colourant dispenser system, thereby enabling any colourant dispenser system causing concern to be identified.

According to another aspect of the present invention there is provided a method for detecting errors of weight of colourant dispensed in a process for tinting base paint supplied in a container which base paint is suitable for use in a tinted coating composition so as to produce a tinted coating composition, comprising the steps of dispensing a pre-determined amount of at least one liquid colourant from a colourant dispenser system, the pre-determined amount being appropriate to the achievement of the tinted coating composition directly into a pre-determined type and volume of a base paint, weighing the container to determine an actual dispensed weight of each individual colourant and/or an actual total dispensed weight, and statistically analysing the actual dispensed weight of each individual colourant and/or an actual total dispensed weight using software which employs regression analysis so as to calculate a colourant weight dispenser error value for each colourant dispenser system, thereby enabling any colourant dispenser system causing concern to be identified.

By analysing the actual dispensed weight and the correct weight for each dispensed tinted coating composition, whether the colourant is simultaneously or sequentially dispensed, it is possible to determine a colourant weight dispenser error value for each colourant dispenser system by using the actual dispensed weight generated in the course of the tinting machines normal use, i.e. without having to shut the machine down, by which is meant preventing consumers from obtaining tinted coating compositions from the machine rather than turning the machine off.

Furthermore, it is not necessary for a maintenance engineer to manually inspect each colourant dispenser system to identify any problems. In addition, the individual colourant dispenser system can then be adjusted if necessary so as to dispense the correct quantity of colourant.

This is clearly a more efficient procedure in comparison to the maintenance engineer manually dispensing known quantities of colourant. By identifying the colourant dispenser system of concern, in the event that the maintenance engineer is required to inspect the machine, considerable time is also saved due to the fact that the colourant dispenser system has already been identified.

In the case where the tinting machine is adjusted remotely either automatically or by a computer operator, i.e. not at the location of the tinting machine which is typically in a retail store, it may not be necessary for a maintenance engineer to visit at all. Furthermore, if the tinting machine is not adjusted remotely, the fact that adjustment required itself can be determined remotely enables a tinting machine operator to carry out the adjustment locally, without the need for a maintenance engineer. This would not be possible in the case where the error associated with individual colourant dispenser systems is not known, since it is not possible to adjust the tinting machine as a whole, but only individual colourant dispenser systems.

Thus, it can be seen that the present invention not only reduces the time the machine is out of calibration, thereby reducing the likelihood of mis-tints, but also minimises the requirement for maintenance engineer visits, and in the case where a visit is required less time is spent analysing the machine since the colourant dispenser system at fault has already been identified.

The present invention will now be described by way of example only with reference to the accompanying drawings, in which:
Figure 1 is a diagrammatic representation of a tinting machine system, and
Figure 2 is a schematic representation of the colourant dispenser systems of the tinting machine of figure 1.

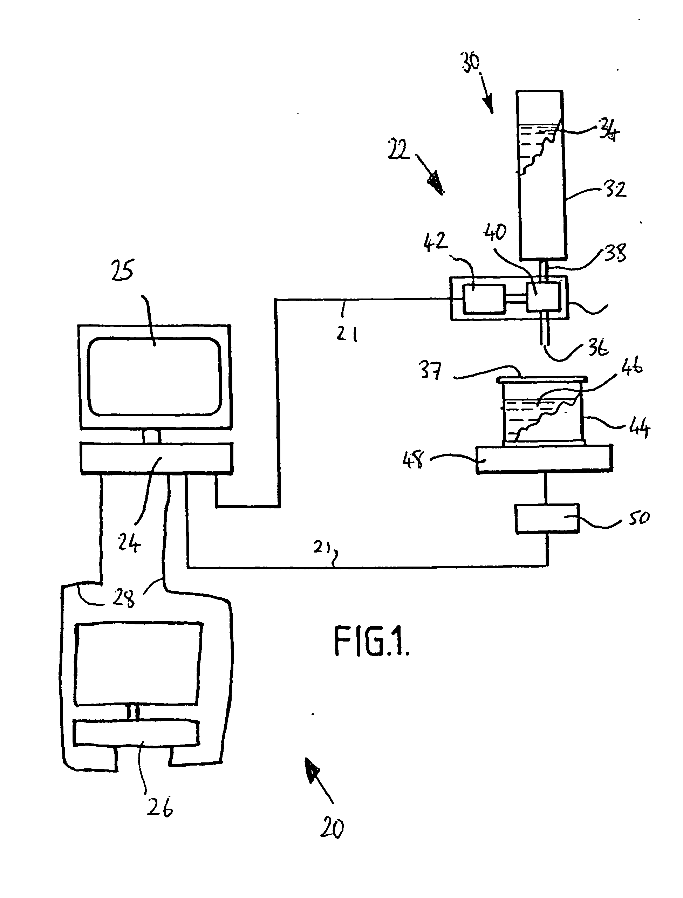

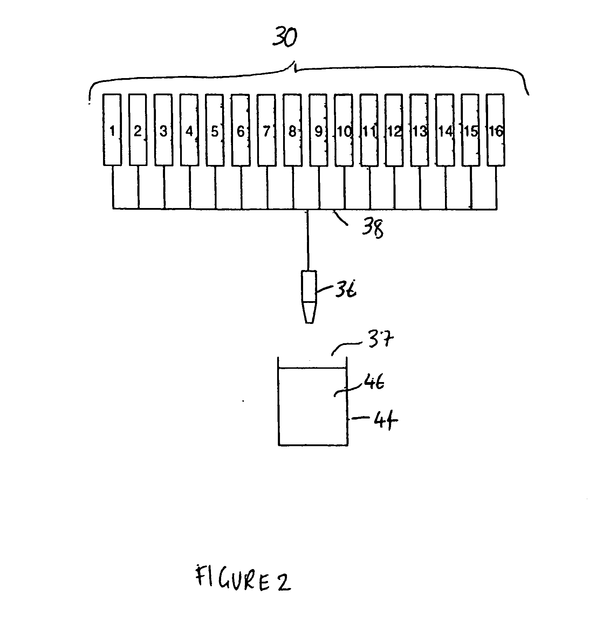

With reference to figures 1 and 2 there is shown a tinting machine system 20 comprising a tinting machine 22, processing means in the form of a first personal computer 24, and a second personal computer 26. The tinting machine 22 is an in-store tinting machine, typically used in retail store outlets to enable consumers to purchase tinted coating compositions. Paint containers of all sizes are used, typically those sizes used by consumers when purchasing paint that is not mixed in store. However, the size of the container is not limited to such sizes, but to sizes which are capable of being prepared in an in-store tinting machine. It is also to be understood that tinting machines also includes machines that are located in environments not accessible by the consumer, for example, in a contractor's warehouse.

The first personal computer 24 stores a collection of colour recipes which includes information indicating which base paint to select for tinting, the amount of each colourant addition to be made and the final weight of the container of tinted paint for each tinted coating composition. The amount of colourant addition may be by weight or volume. The colours may be identified by name, code or cypher or combinations thereof, for example British Standard or RAL names or codes, NCS (Natural Colour System), NCS2, or "Dulux" "Colour Palette" cyphers. The collection of colour recipes can be recorded in various forms including a compilation or a database. Preferably they are recorded systematically or methodically and are individually accessible to form a database which enables additions and deletions to be more readily made. In this embodiment, the collection of recipes can be stored directly onto the hard drive of the first personal computer 24, alternatively other storage means, such as floppy disks, optical disks such as a CD-ROM and Digital Versatile Disk (DVD) may be used.

The first personal computer 24 also has software installed which enables both control of the tinting machine 22, and analysis of the weights of the dispensed tinted coating composition. The first personal computer 24 is further connected to a video display 25 to which messages can be signalled and displayed.

In this embodiment, the first personal computer 24 is directly connected to the tinting machine 22 via a cable 21. In an alternative embodiment, the first personal computer may stand alone, in which case it may communicate with the tinting machine from a remote location via a phone line, across a network, or any other suitable connection.

The second personal computer 26 is remote from the tinting machine 22 and is connected to the tinting machine using a phone line 28 which connects via the first personal computer 24. The second personal computer 26 includes statistical analysis software which analyses data collected from the tinting machine (see below). In another embodiment the second personal computer can be connected to the tinting machine via a network connection, the internet, or any other suitable connection.

In an alternative embodiment the first and second personal computers could be integrated into a single processing means, with the single processing means being local to, either integrated with or stand alone, or remote from the tinting machine. In the case where the single processing means is remote from the tinting machine, it will be necessary to provide further processing means proximate the tinting machine to enable it to be controlled by a machine operator.

The tinting machine 22 includes sixteen colourant dispenser systems 30 (only one of which is shown in figure 1). Each colourant dispenser system 30 includes a storage vessel 32 which contains colourant 34. Figure 2 shows that each of the colourant dispenser systems 30 (numbered 1 to 16) is connected to a common dispensing nozzle 36 via pipework 38. Each colourant dispenser system 30 includes a pump 40 which is driven by an actuator in the form of a stepper motor 42. Each stepper motor 42, and thus the dispensing of individual colourants 34, is controlled by the first personal computer 24. To dispense the required amount of colourant for the particular coating composition, the stepper motor 42 is operated so as to turn the pump 40 a specified number of turns. In this embodiment, the pumps and motors are identical for each colourant dispenser system. Alternatively, different sized pumps and motors could be used for each colourant dispenser system depending on the requirement of that system.

In this embodiment, the addition of colourant to the base paint is carried out using a pump driven by a stepper motor. In other embodiments a piston type arrangement may be used instead of a pump, or a syringe driven by a motor. Stepper motors are preferred as they can be accurately controlled thereby delivering precise quantities of colourant via the pump. Alternatively, a standard motor and an encoder can perform the same function as the stepper motor.

In this embodiment, where more than one colourant is required to achieve the tinted coating composition the colourants are added substantially simultaneously so as to reduce the overall dispensing time. In an alternative system, the colourants can be added sequentially, i.e., one after the other.

Whilst in this embodiment sixteen colourants are used, any number of colourants may be used, although typically, between nine and thirty two colourants are used. Increasing the number of colourants may increase the number of tints available, but will add to the complexity of the tinting machine.

Suitable colourants include pigments, pigment concentrates and dyes. Pigment concentrates generally comprise high levels of pigment, dispersed in a carrier liquid, optionally with the aid of dispersant. The carrier liquid may be an organic solvent or water or mixtures thereof. Solutions of dyes in appropriate solvents or undiluted dyes are also useful. Pigment concentrates are preferred for paints as they provide better hiding power than dyes. It is to be understood that the present invention can use any suitable colourants or carrier liquids, and is not limited to those examples given. Other examples include water based pigment dispersions, or resin based pigment dispersions carried in solvents. It will also be appreciated that the present invention is not limited to the use of liquid colourants, with dry colourants, for example colourants in the form of solid tinters, also envisaged.

Figures 1 and 2 shows a base paint container 44 part cut away to reveal that it is almost fully filled with base paint 46 situated on weighing means in the form of a load cell 48. The load cell 48 is connected to an analogue to digital converter (ADC) 50, which signals in digital format any weight registered by the load cell 48 to the first personal computer 24.

A load cell is a device which produces an output signal proportional to the applied weight or force when that weight or force is within the range of operation of that device. Load cells are the preferred form of weighing means for this application since they are better able to register a wide range of weights accurately. This is important since light colours require a small addition of colourant to the base paint, and deep colours typically require significantly more colourant to be added. However, other weighing means are also envisaged which are similarly able to register such a wide range of weight accurately.

The nozzle 36 is located vertically above open mouth 37 of the container so that additions of colourant can be conveniently made to the base paint.

The base paint 46 comprises all the necessary components of a coating composition including pigment, binder, carrier liquid, solvent, dispersant, antifoam, coalescing aid and other additives typically found in coating compositions. The base paint is distinguished from the final tinted coating composition mainly because it does not contain all of the required colourants to produce a specified colour contained in the collection of colour recipes. The number of base paints required for a particular product, for example a finish such as matt emulsion, ranges, typically, from one to eight is generally from three to eight, and preferably from four to six are used as this reduces the risk of selecting the wrong base paint for tinting whilst maintaining acceptable capability in producing the necessary range of colours.

The tinting machine system is operated as follows:
A consumer will firstly select a desired tint, sheen, for example matt, silk, or gloss, and container volume, which is communicated to the machine operator. Each selection will have a code which corresponds to a particular colour recipe stored on the computer. The selection is inputted into the first personal computer 24 by the machine operator, and the computer will determine firstly, which combination of colourants are required, and in what quantity for the selected container volume, and secondly which base paint is required. In another embodiment, the tinting machine could be a self-service machine where the selection is inputted directly by the consumer.

The machine operator will position the correct base paint container 44 under the dispensing nozzle 36, and then activate the tinting machine 22 via the first personal computer 24 such that the stepper motor 42 drives the pump 40 of each appropriate colourant dispenser system 30, and dispenses the colourant 34 into the paint container 44 via nozzle 36 to produce a tinted coating composition. After all the colourants required have been dispensed, the container 44 is shaken to ensure a homogeneous mix.

The software installed in the first personal computer 24 controls the tinting machine so that the paint container 44 is weighed before dispensing colourant, and after all the colourants required have been dispensed. The total actual weight of colourants dispensed can then be calculated for the dispensed tinted coating composition, i.e. the combined weight of colourants, not specific colourant weights. The first personal computer 24 also stores both the correct weight of individual colourants which should have been dispensed for that particular tinted coating composition, and the correct weight of the tinted coating composition (including all ingredients) this being based on the colour recipe and the volume of the paint container. The correct weights and the actual weight for the particular tinted coating composition is then logged on the first personal computer.

If the difference between the correct weight for the tinted coating composition and the actual weight for the dispensed coating composition is outside an acceptable range, typically a ten percent deviation from the correct value, then the machine operator is warned via the display unit 25 that a mis-tint has occurred, and appropriate action can be taken, typically re-dispensing the coating composition.

In the event the difference between the correct and actual weights is outside a predetermined range, i.e. a range considered to be typical for errors due to incorrect quantities of colourant being dispensed, the machine operator is also alerted. This difference is typically as a result of operator error. In such circumstances, whilst the machine operator is alerted to such an error, and such weight data is logged on the first personal computer, it is not used in the statistical analysis of the data since the error is not attributable to the quantity of colourant dispensed, and therefore not relevant in determining errors attributable to the colourant dispenser system.

The above procedure is repeated as more consumers request tinted coating compositions, with the actual and correct weight of the tinted coating compositions being logged. It will be appreciated that over a period of time, data is collected for different tinted coated compositions, i.e. compositions which use different numbers and combinations of colourants.

The actual and dispensed weight data for each dispensing coating composition (apart from those ignored as detailed above) is accessed by the second personal computer 26 via the phone line 28. It is also possible to use a network connection 28 or the internet to access the data, or the data can be transferred manually to the second personal computer 26 via storage media such as, for example, a CD-ROM.

The statistical analysis software installed in the second personal computer 26 analyses the logged actual and correct weight for each dispensed coating system by firstly calculating the difference between the actual and correct weight data. Each dispensed coating composition will comprise, in addition to the base paint, for example three colourants, and therefore the difference between the actual and correct weighs is attributable to influences from the three colourant dispenser systems, typically but not limited to wear of the pump associated with each system. Thus the difference is essentially due to, in this case, three factors. It will be appreciated that mis-tints are caused by other factors in the colourant dispenser system, for example, blockages, and that the present invention can be used to identify the differences caused by these factors.

A least squares regression analysis is a known statistical analysis technique, by which it is possible to determine the effect of individual factors on an overall result which is influenced by those factors. In this case, the individual parameters are the individual colourants dispensed for each dispensed tinted coating composition, and the overall result is the difference between the actual and correct weight of the dispensed tinted coating composition. Thus, by employing least squares regression analysis on the logged actual and correct weights for a number of dispensed coating compositions, the influence of each colourant dispenser system on the difference is calculated, and thus a colourant weight dispenser error value for each colourant dispensing system is determined.

The colourant weight dispenser error value is a percentage deviation (positive or negative) from a correct value of colourant which should have been dispensed, this correct value being determined from an initial calibration curve generated manually by a maintenance engineer. Typically, the initial calibration curve is a straight line governed by the relationship y=mx+c, y being equal to the number of motor steps, x being equal to the quantity of colourant, and m being the gradient of the curve. The intercept c allows for the fact that, in some cases, a certain number of motor steps are required before any colourant is dispensed. Thus, based on this relationship, the number of motor steps to dispense a required amount of colourant is known. This data is stored on the first personal computer.

An error value of -e% means that the particular colourant dispenser system is dispensing e% less colourant than the initial calibration curve suggested, and therefore to dispense the correct amount of colourant, the initial calibration curve can be adjusted taking into account the error value of -e% to generate a new calibration curve. More specifically, the new calibration curve will be of the form, y=(m+e)x+c to reflect the new relationship such that to dispense the correct of amount of colourant more steps of the motor are required.

Conversely, an error value of +e%, means that more colourant is being dispensed, and therefore the new calibration curve will be of the form, y=(m-e)x+c to reflect the new relationship such that to dispense the correct of amount of colourant less steps of the motor are required.

Before adjusting the calibration curve, the software installed in the second personal computer 26 compares the colourant weight dispenser error value for each colourant dispenser system to an acceptable range for that system. For example, error values within ten percent may be considered acceptable, and therefore no adjustment will be made unless the error value is more than ten per cent above or below the correct value based on the initial calibration. In the event that the error value is outside the acceptable range, the calibration between the number of motor steps and quantity of colourant is adjusted such that a given input to the stepper motor will dispense the correct amount of colourant. Clearly, the acceptable range can be set accordingly.

The software on the second personal computer 26 can be programmed such that the adjustments are made automatically, for example, if the colourant weight dispenser error value is outside the acceptable range the computer automatically sends a signal directly to the tinting machine to adjust the calibration curve. In the case where the second personal computer is remote from tinting machine it can be seen that this automatic adjustment process is also a remote process. The software can also be programmed such that the adjustments are made when the tinting machine is not in operation, for example, outside store opening hours. Thus, whilst the automatic adjustments are automatic in the sense that no operator input is required, they are not instantaneously made when the error value is calculated.

Alternatively, instead of automatic adjustment, the software can be programmed to alert the user of the second personal computer 26 to the error value, enabling adjustments to be made when appropriate. The adjustments can still be made remotely under the control of the operator of the second personal computer 26, but, in this case, they are not made automatically. It is also possible for the adjustments to be made locally at the tinting machine 22, by editing the calibration curve, either by the machine operator or by a maintenance engineer.

In addition to determining an error value for each colourant dispenser, the regression analysis also calculates a confidence level for each error value. The error values calculated will have a higher confidence level as the number of dispensed coating compositions analysed increases. Theoretically, the number of tinted coating compositions dispensed needs to be in the order of twenty multiplied by the number of colourants (sixteen in this example), giving three hundred and twenty. However, it has been found that error values that equate to actual manually calibrated data have been generated with less than this theoretical number. For example, using sixteen colourants, three hundred dispensed coating compositions has proven to give comparable error values.

In both automatic and non-automatic adjustment, the confidence level corresponding to each colourant dispenser system error value can be used to decide whether or not adjustments are required.

In the case of automatic adjustment, a predetermined confidence level can be set, above which adjustments are automatically made, for example, more than ninety percent confidence might be considered sufficient to permit automatic adjustment.

In the case of non-automatic adjustment, the user can decide, possibly with additional information, if adjustment is required. For example, the user may suspect a particular colourant is at fault, and therefore the confidence level might not be so critical.

It should be noted that for those colourant dispenser systems which are used frequently, the confidence level will be higher. This is important because it is these high use systems which are more likely to be wear, and therefore more likely to require adjustment.

Conversely, if a specific colourant has not been used frequently, then the error value calculated for that colourant dispenser system will have been obtained on a small sample of data, and will therefore have a low level of confidence as to whether the error value is correct. To address this potential low level of confidence it is possible to store data for all dispensed coating compositions containing this low use colourant in conjunction with colourants whose corresponding colourant dispenser system has not been adjusted. The stored data can then be added to data generated for subsequently dispensed coating compositions to create a new combined data set. It may be that by adding the stored data to the subsequently generated data, the statistical analysis results in calculated error values for the low use colourants with sufficiently high confidence levels. However, if the confidence level is still too low, it is possible to repeat this process of combining future data sets with subsets of previous data sets until a sufficient degree of confidence in the low use colourant error value is obtained.

In the case of a colour dispenser system which has not been used at all, no statistical analysis will be conducted, and therefore no error value will be generated. This is of even less concern since the lack of use will result in no wear to the colourant dispenser system.

Thus it can be seen that the individual error value associated with each colourant dispenser system can be determined by analysing the logged weight data, and then appropriate action can be taken to adjust individual colourant dispensers, either automatically or manually, and either locally or remotely.

A particular benefit of the present invention is where adjustment of the colourant dispenser system is made automatically by a processor which is integrated within the tinting machine, with typically being the processor which runs the tinting machine. In this case, no remote processing means is required, either to analyse data, or to activate adjustment.

It would also be possible to verify the error value calculated by the regression analysis by running the machine in a verification mode, where colourant is sequentially dispensed and weighed before and after dispensing. This could be repeated for different colourants, and for a different number of times. This would generate an actual error value which could be compared to the statistically calculated value. If the actual and calculated values are comparable, or within a specified range then the adjustment of the calibration curve can then be made. It will be appreciated that software controlling the tinting machine can be programmed to include running the machine in the verification mode, and then compare the actual results with those calculated using statistical analysis.

In another embodiment, the tinting machine can dispense colourant sequentially, as opposed to the substantially simultaneous dispensing of the embodiment of figures 1 and 2.

In such an embodiment it will be appreciated that the regression statistical analysis described in the embodiment of figures 1 and 2 can also be employed in the same way to calculate an error value for each colourant dispenser system, by weighing the tinted coating composition before adding colourant and after all colourants have been added. In this case the actual weights are compared to correct weights which correspond to the total weight of the tinted coating composition.

By virtue of the fact that the colourants are dispensed sequentially, it is also possible to programme the first personal computer such that the paint container is weighed before dispensing colourant, and after each individual colourant has been dispensed, and logging the actual weight of colourant dispensed for each colourant and for each composition. In this case, regression analysis is not essential because the sequential nature of the dispensing enables the difference between actual and correct weights to be measured directly for individual colourants. The correct weights in this case are those stored for the individual colourants in the particular coating composition, and not the total weight of the coating composition. The statistical analysis in such a system would then involve, for example, an average of several readings for that particular colourant dispenser system. It will be appreciated however that weighing the container after each colourant has been dispensed will slow down the operation of the machine.

In this embodiment, it is possible to weigh the tinted coating composition both before and after all the colourants have been dispensed, and after each colourant has been dispensed. In this way it is possible to calculate two colourant dispenser system error values for each colourant dispenser system, and more importantly enable a comparison to be made between the error value calculated using regression analysis, and the error value determined from weighing individual colourants. This will enable a check to be made on calculated error values, but clearly this is limited to running the machine in sequential dispensing mode.

Thus, in the case of a tinting machine with sequentially dispensed colourant, the present invention provides a system that determines the error value for each colourant dispenser system using either regression analysis, without any reduction in the tinting process speed, or alternative statistical analysis on individually weighed colourant, but with a reduction in the speed of the tinting process. Clearly, the choice of system will largely depend on the requirement for the tinting process to be carried out quickly. For example, in a store where the tinting machine is infrequently used, the reduction in speed of the process by weighing individual colourants may not be a concern, however, in a high use store, the use of regression analysis would seem more appropriate.

It will be appreciated that whilst the embodiments described above are in relation to adjusting the calibration curve for gear pumps, the invention is equally applicable to other colourant dispenser systems, for example, bellow machines or piston pumps, or any system which requires an actuator, for example a stepper motor, to dispense a given quantity of colourant.

## Claims

1. A tinting machine system (20) for tinting base paint (46) supplied in a container (44) which base paint is suitable for use in a tinted coating composition so as to produce a tinted coating composition,
the tinting machine system comprising a tinting machine (22) and processing means (24,26),
the tinting machine having a colourant dispenser system (30) comprising an actuator able to dispense a pre-determined amount of at least one liquid colourant (34) directly into the container, and weighing means (48) able to weigh the container to determine an actual dispensed weight of each individual colourant and/or an actual total dispensed weight,
the processing means able to compare the actual dispensed weight of each individual colourant and/or the actual total dispensed weight, with a correct weight for the tinted coating composition stored in the processing means for each dispensed tinted coating composition, **characterized in that** the processing means comprises statistical analysis means, the statistical analysis means being software which employs regression analysis to statistically analyse the actual dispensed weight of each individual colourant and/or the actual total dispensed weight for each dispensed tinted coating composition so as to calculate a colourant weight dispenser error value for each colourant dispenser system, thereby enabling any colourant dispenser system causing concern to be identified.

2. A tinting machine system according to claim 1 in which a defined relationship exists between the amount of colourant dispensed and a given actuator input, and the processing means is able to correct the defined relationship to compensate for the colourant weight dispenser error value for any colourant dispenser system causing concern.

3. A tinting machine system according to claim 1 or 2 in which the correct weight for the tinted coating composition is a total weight for that particular tinted coating composition, and/or individual colourant weights for that particular tinted coating composition.

4. A tinting machine system according to any preceding claim in which the tinted coating composition includes more than one colourant, each colourant is dispensed substantially simultaneously, and the weighing means is able to weigh the container to determine the actual total dispensed weight.

5. A tinting machine according to any one of claims 1 to 3 in which the tinted coating composition includes more than more than one colourant, each colourant is dispensed sequentially, and the weighing means is able to weigh the container to determine the actual dispensed weight of each individual colourant and/or the actual total dispensed weight.

6. A tinting machine system according to any preceding claim in which the processing means is remote from the tinting machine.

7. A tinting machine system according to any preceding claim in which the processing means is able to determine if the colourant weight dispenser error value associated with each colourant dispenser system is within an acceptable range.

8. A tinting machine system according to claim 7 in which the processing means includes signal means capable of sending a signal to the tinting machine to adjust the colourant dispenser system so that it is restored within the acceptable range.

9. A tinting machine system according to claim 8 in which the signal means automatically sends the signal to the tinting machine when the error value is outside the acceptable range.

10. A tinting machine according to any preceding claim in which the processing means comprises a first processing means, and a second processing means.

11. A tinting machine system according to claim 10 in which the second processing means is remote from the tinting machine.

12. A tinting machine system according to any preceding claim in which the tinting machine is an in-store tinting machine suitable for use by in-store machine operators.

13. A method for detecting errors of weight of colourant dispensed in a process for tinting base paint (46) supplied in a container (44) which base paint is suitable for use in a tinted coating composition so as to produce a tinted coating composition, comprising the steps of:
dispensing a pre-determined amount of at least one liquid colourant (34) from a colourant dispenser system (30), the pre-determined amount being appropriate to the achievement of the tinted coating composition, directly into a pre-determined type and volume of a base paint,
weighing the container to determine an actual dispensed weight of each individual colourant and/or an actual total dispensed weight, **characterized in that** the method further comprises the step of
statistically analysing the actual dispensed weight of each individual colourant and/or an actual total dispensed weight using software which employs regression analysis so as to calculate a colourant weight dispenser error value for each colourant dispenser system, thereby enabling any colourant dispenser system causing concern to be identified.

14. A method according to claim 13 in which a defined relationship exists between the amount of colourant dispensed and a given actuator input, and the defined relationship is correctable to compensate for the colourant weight dispenser error value for any colourant dispenser system causing concern.

15. A method according to claim 13 or 14 in which the tinted coating composition includes more than one colourant, each colourant is dispensed substantially simultaneously, and the container is weighed to determine the actual total dispensed weight.

16. A method according to claims 13 or 14 in which the tinted coating composition includes more than more than one colourant, each colourant is dispensed sequentially, and the container is weighed to determine the actual dispensed weight of each individual colourant and/or the actual total dispensed weight.

## Patentansprüche

1. Tönungsmaschinensystem (20) zum Tönen einer Grundfarbe (46), die in einem Behälter (44) bereitgestellt wird, wobei die Grundfarbe für die Verwendung in einer getönten Beschichtungszusammensetzung geeignet ist, um eine getönte Beschichtungszusammensetzung zu erzeugen,
wobei das Tönungsmaschinensystem eine Tönungsmaschine (22) und Verarbeitungseinrichtungen (24, 26) aufweist,
wobei die Tönungsmaschine ein Farbmittelabgabesystem (30) hat, das einen Aktuator, der fähig ist, eine vorgegebene Menge wenigstens eines flüssigen Farbmittels (34) direkt in den Behälter abzugeben, und eine Wiegeeinrichtung (48) aufweist, die fähig ist, den Behälter zu wiegen, um ein tatsächlich abgegebenes Gewicht jedes einzelnen Farbmittels und/oder ein abgegebenes Gesamtgewicht, zu wiegen,
wobei die Verarbeitungseinrichtung fähig ist, das tatsächlich abgegebene Gewicht jedes einzelnen Farbmittels und/oder des tatsächlichen abgegebenen Gesamtgewichts mit einem korrekten Gewicht für die getönte Beschichtungszusammensetzung, das in der Verarbeitungseinrichtung für jede abgegebene Tönungsbeschichtungszusammensetzung gespeichert ist, zu vergleichen, **dadurch gekennzeichnet, dass** die Verarbeitungseinrichtung eine statistische Analyseeinrichtung aufweist, wobei die statistische Analyseeinrichtung Software ist, die eine Regressionsanalyse verwendet, um das tatsächliche abgegebene Gewicht jedes einzelnen Farbmittels und/oder das tatsächliche abgegebene Gesamtgewicht für jede abgegebene getönte Beschichtungszusammensetzung statistisch zu analysieren, um einen Farbmittel-Gewichtsabgabefehler für jedes Farbmittelabgabesystem zu berechnen, wodurch jedes bedenkliche Farbmittelabgabesystem identifiziert werden kann.

2. Tönungsmaschinensystem nach Anspruch 1, in dem eine definierte Beziehung zwischen der Menge an abgegebenem Farbmittel und einer gegebenen Aktuatoreingabe besteht, und in der die Verarbeitungseinrichtung fähig ist, die definierte Beziehung zu korrigieren, um den Farbmittel-Gewichtsabgabefehler für jedes bedenkliche Farbmittelabgabesystem zu kompensieren.

3. Tönungsmaschinensystem nach Anspruch 1 oder 2, in dem das korrekte Gewicht für die getönte Beschichtungszusammensetzung ein Gesamtgewicht für diese bestimmte getönte Beschichtungszusammensetzung und/oder einzelne Farbmittelgewichte für diese bestimmte getönte Beschichtungszusammensetzung ist/sind.

4. Tönungsmaschinensystem nach einem der vorhergehenden Ansprüche, in dem die getönte Beschichtungszusammensetzung mehr als ein Farbmittel umfasst, wobei jedes Farbmittel im Wesentlichen gleichzeitig abgegeben wird, und die Wiegeeinrichtung fähig ist, den Behälter zu wiegen, um das abgegebene Gesamtgewicht zu bestimmen.

5. Tönungsmaschinensystem nach einem der Ansprüche 1 bis 3, in dem die getönte Beschichtungszusammensetzung mehr als ein Farbmittel aufweist, wobei jedes Farbmittel nacheinander abgegeben wird, und die Wiegeeinrichtung fähig ist, den Behälter zu wiegen, um das tatsächlich abgegebene Gewicht jedes einzelnen Farbmittels und/oder das abgegebene Gesamtgewicht zu bestimmen.

6. Tönungsmaschinensystem nach einem der vorhergehenden Ansprüche, in dem die Verarbeitungseinrichtung fern von der Tönungsmaschine ist.

7. Tönungsmaschinensystem nach einem der vorhergehenden Ansprüche, wobei die Verarbeitungseinrichtung fähig ist, zu bestimmen, ob der zu jedem Farbmittelabgabesystem gehörende Farbmittel-Gewichtsabgabefehlerwert innerhalb eines annehmbaren Bereichs liegt.

8. Tönungsmaschinensystem nach Anspruch 7, wobei die Verarbeitungseinrichtung eine Signaleinrichtung umfasst, die fähig ist, ein Signal an die Tönungsmaschine zu senden, um das Farbmittelabgabesystem derart einzustellen, dass es innerhalb den annehmbaren Bereich zurückgebracht wird.

9. Tönungsmaschinensystem nach Anspruch 8, wobei die Signaleinrichtung das Signal automatisch an die Tönungsmaschine sendet, wenn der Fehlerwert außerhalb des annehmbaren Bereichs ist.

10. Tönungsmaschinensystem nach einem der vorhergehenden Ansprüche, wobei die Verarbeitungseinrichtung eine erste Verarbeitungseinrichtung und eine zweite Verarbeitungseinrichtung aufweist.

11. Tönungsmaschinensystem nach Anspruch 10, in dem die zweite Verarbeitungsvorrichtung fern von der Tönungsmaschine ist.

12. Tönungsmaschinensystem nach einem der vorhergehenden Ansprüche, wobei die Tönungsmaschine eine Filial- oder Ladentönungsmaschine ist, die für die Verwendung durch Anwender einer Filial- oder Ladenmaschine geeignet ist.

13. Verfahren zum Erfassen von Gewichtsfehlern von Farbmittel, das in einem Verfahren zum Tönen einer Grundfarbe (46), die in einem Behälter (44) bereitgestellt wird, abgegeben wird, wobei die Grundfarbe für die Verwendung in einer getönten Beschichtungszusammensetzung geeignet ist, um eine getönte Beschichtungszusammensetzung zu erzeugen, das die folgenden Schritte aufweist:
Abgeben einer vorgegebenen Menge wenigstens eines flüssigen Farbmittels (34) von einem Farbmittelabgabesystem (30) direkt in eine Grundfarbe vorgegebener/s Art und Volumens, wobei die vorgegebene Menge für das Erreichen der getönten Beschichtungszusammensetzung geeignet ist,
Wiegen des Behälters, um ein tatsächlich abgegebenes Gewicht jedes einzelnen Farbmittels und/oder ein abgegebenes Gesamtgewicht zu bestimmen, **dadurch gekennzeichnet, dass** das Verfahren ferner den folgenden Schritt aufweist:
statistisches Analysieren des tatsächlich abgegebenen Gewichts jedes einzelnen Farbmittels und/oder des tatsächlichen abgegebenen Gesamtgewichts unter Verwendung von Software, die eine Regressionsanalyse verwendet, um einen Farbmittel-Gewichtsabgabefehler für jedes Farbmittelabgabesystem zu berechnen, wodurch jedes bedenkliche Farbmittelabgabesystem identifiziert werden kann.

14. Verfahren nach Anspruch 13, in dem eine definierte Beziehung zwischen der Menge an abgegebenem Farbmittel und einer gegebenen Aktuatoreingabe besteht, und die definierte Beziehung korrigierbar ist, um den Farbmittel-Gewichtsabgabefehler für jedes bedenkliche Farbmittelabgabesystem zu kompensieren.

15. Verfahren nach Anspruch 13 oder 14, in dem die getönte Beschichtungszusammensetzung mehr als ein Farbmittel umfasst, wobei jedes Farbmittel im Wesentlichen gleichzeitig abgegeben wird, und der Behälter gewogen wird, um das abgegebene Gesamtgewicht zu bestimmen.

16. Verfahren nach Anspruch 13 oder 14, in dem die getönte Beschichtungszusammensetzung mehr als ein Farbmittel aufweist, wobei jedes Farbmittel nacheinander abgegeben wird, und der Behälter gewogen wird, um das tatsächlich abgegebene Gewicht jedes einzelnen Farbmittels und/oder das abgegebene Gesamtgewicht zu bestimmen.

## Revendications

1. Système de machine à teinter (20) pour teinter une peinture de base (46) fournie dans un contenant (44), la peinture de base étant appropriée pour une utilisation dans une composition de revêtement teintée de façon à produire une composition de revêtement teintée,
le système de machine à teinter comprenant une machine à teinter (22) et un moyen de traitement (24, 26),
la machine à teinter ayant un système de distributeur de colorant (30) comprenant un actionneur capable de distribuer une quantité prédéterminée d'au moins un colorant liquide (34) directement dans le contenant, et un moyen de pesage (48) capable de peser le contenant pour déterminer un poids distribué effectif de chaque colorant individuel et/ou un poids distribué total effectif,
le moyen de traitement étant capable de comparer le poids distribué effectif de chaque colorant individuel et/ou le poids distribué total effectif, à un poids correct pour la composition de revêtement teintée stockée dans le moyen de traitement pour chaque composition de revêtement teintée distribuée, **caractérisé en ce que** le moyen de traitement comprend un moyen d'analyse statistique, le moyen d'analyse statistique étant un logiciel qui emploie une analyse de régression pour analyser statistiquement le poids distribué effectif de chaque colorant individuel et/ou le poids distribué total effectif pour chaque composition de revêtement teintée distribuée de façon à calculer une valeur d'erreur de distributeur de poids de colorant pour chaque système de distributeur de colorant, permettant ainsi d'identifier tout système de distributeur de colorant posant un problème.

2. Système de machine à teinter selon la revendication 1, dans lequel il existe une relation définie entre la quantité de colorant distribuée et une entrée d'actionneur donnée, et le moyen de traitement est capable de corriger la relation définie pour compenser la valeur d'erreur de distributeur de poids de colorant pour tout système de distributeur de colorant posant un problème.

3. Système de machine à teinter selon la revendication 1 ou 2, dans lequel le poids correct pour la composition de revêtement teintée est un poids total pour cette composition de revêtement teintée particulière, et/ou des poids de colorant individuels pour cette composition de revêtement teintée particulière.

4. Système de machine à teinter selon l'une quelconque des revendications précédentes, dans lequel la composition de revêtement teintée inclut plus d'un colorant, chaque colorant étant distribué sensiblement simultanément, et le moyen de pesage est capable de peser le contenant pour déterminer le poids distribué total effectif.

5. Machine à teinter selon l'une quelconque des revendications 1 à 3, dans laquelle la composition de revêtement teintée inclut plus d'un colorant, chaque colorant étant distribué séquentiellement, et le moyen de pesage est capable de peser le contenant pour déterminer le poids distribué effectif de chaque colorant individuel et/ou le poids distribué total effectif.

6. Système de machine à teinter selon l'une quelconque des revendications précédentes, dans lequel le moyen de traitement est distant de la machine à teinter.

7. Système de machine à teinter selon l'une quelconque des revendications précédentes, dans lequel le moyen de traitement est capable de déterminer si la valeur d'erreur de distributeur de poids de colorant associée à chaque système de distributeur de colorant se trouve dans une plage acceptable.

8. Système de machine à teinter selon la revendication 7, dans lequel le moyen de traitement inclut un moyen de signal capable d'envoyer un signal à la machine à teinter pour ajuster le système de distributeur de colorant de sorte qu'il revient dans la plage acceptable.

9. Système de machine à teinter selon la revendication 8, dans lequel le moyen de signal envoie automatiquement le signal à la machine à teinter lorsque la valeur d'erreur est à l'extérieur de la plage acceptable.

10. Machine à teinter selon l'une quelconque des revendications précédentes, dans laquelle le moyen de traitement comprend un premier moyen de traitement, et un second moyen de traitement.

11. Système de machine à teinter selon la revendication 10, dans lequel le second moyen de traitement est distant de la machine à teinter.

12. Système de machine à teinter selon l'une quelconque des revendications précédentes, dans lequel la machine à teinter est une machine à teinter en magasin appropriée pour une utilisation par des opérateurs de machine en magasin.

13. Procédé de détection d'erreurs de poids de colorant distribué dans un processus visant à teinter une peinture de base (46) fournie dans un contenant (44), la peinture de base étant appropriée pour une utilisation dans une composition de revêtement teintée de façon à produire une composition de revêtement teintée, comprenant les étapes consistant à :
distribuer une quantité prédéterminée d'au moins un colorant liquide (34) à partir d'un système de distributeur de colorant (30), la quantité prédéterminée étant appropriée pour l'obtention de la composition de revêtement teintée, directement dans un type et un volume prédéterminés d'une peinture de base,
peser le contenant pour déterminer le poids distribué effectif de chaque colorant individuel et/ou un poids distribué total effectif, **caractérisé en ce que** le procédé comprend en outre l'étape consistant à
analyser statistiquement le poids distribué effectif de chaque colorant individuel et/ou un poids distribué total effectif en utilisant un logiciel qui emploie une analyse de régression de façon à calculer une valeur d'erreur de distributeur de poids de colorant pour chaque système de distributeur de colorant, permettant ainsi d'identifier tout système de distributeur de colorant posant un problème.

14. Procédé selon la revendication 13, dans lequel il existe une relation définie entre la quantité de colorant distribuée et une entrée d'actionneur donnée, et la relation définie peut être corrigée pour compenser la valeur d'erreur de distributeur de poids de colorant pour tout système de distributeur de colorant posant un problème.

15. Procédé selon la revendication 13 ou 14, dans lequel la composition de revêtement teintée inclut plus d'un colorant, chaque colorant étant distribué sensiblement simultanément, et le contenant est pesé pour déterminer le poids distribué total effectif.

16. Procédé selon la revendication 13 ou 14, dans lequel la composition de revêtement teintée inclut plus d'un colorant, chaque colorant étant distribué séquentiellement, et le contenant est pesé pour déterminer le poids distribué effectif de chaque colorant individuel et/ou le poids distribué total effectif.
